# EUROPÄISCHE PATENTSCHRIFT

(11) **EP 2 067 051 B1**
(45) Veröffentlichungstag und Bekanntmachung des Hinweises auf die Patenterteilung: **30.11.2016**
(21) Anmeldenummer: 07787415.4
(22) Anmeldetag: 12.07.2007
(51) Int. Cl.: H02J 7/00

(54) **LADEVORRICHTUNG**
CHARGING DEVICE
DISPOSITIF DE CHARGE

(30) Priorität: 11.09.2006 DE 102006042603
(43) Veröffentlichungstag der Anmeldung: 10.06.2009
(73) Patentinhaber: Robert Bosch GmbH, 70442 Stuttgart (DE)
(72) Erfinder: DENGLER, Klaus, 70806 Kornwestheim (DE); OSSWALD, Alexander, 70599 Stuttgart (DE); SCHMID, Ursula, 70374 Stuttgart (DE)
(86) Internationale Anmeldenummer: PCT/EP2007/057144
(87) Internationale Veröffentlichungsnummer: WO 2008/031653

(56) Entgegenhaltungen:
- EP-A- 1 612 907
- DE-A1- 3 402 331
- DE-A1- 10 107 697
- DE-A1-102004 040 922
- US-A1- 2006 022 646
- US-A1- 2006 087 286
- US-B1- 6 883 621

## Beschreibung

Die Erfindung betrifft eine Ladevorrichtung umfassend ein Ladegerät sowie mindestens einen wechselbaren, wiederaufladbaren Energiespeicher eines Elektrowerkzeugs nach der Gattung des unabhängigen Anspruchs.

### Stand der Technik

Die Verwendung von Elektrowerkzeugen mit wiederaufladbaren, wechselbaren, Energiespeichern, insbesondere Wechselakkus, für verschiedenste Zwecke ist hinlänglich bekannt. Bei derartigen Geräten wird der Energiespeicher in der Regel in eine dafür vorgesehene Aufnahme eines Griffs des Elektrowerkzeugs eingesteckt, wobei eine Energieversorgung des Elektrowerkzeugs über dafür vorgesehene Kontaktmittel erfolgt.

Als ein Beispiel für ein derartiges Elektrowerkzeug sei die in der GB-A-2 420 031 gezeigte Akku-Bohrmaschine genannt, bei der ein aus mehreren Akkuzellen bestehender Akkupack lösbar mit dem Griff verbunden ist. Der Akkupack verfügt über ein als Schaft mit elektrischen Kontakten ausgebildetes Kontaktmittel, mit dem eine elektrische Verbindung zu einer in der Akku-Bohrmaschine angeordneten elektrischen Schaltung oder einem Ladegerät über entsprechende elektrische Kontakte der Akku-Bohrmaschine bzw. dem Ladegerät herstellbar ist. Weiterhin ermöglicht das Kontaktmittel eine Kommunikation zwischen dem Akkupack und der Akku-Bohrmaschine oder dem Ladegerät. Dazu weist der Akkupack einen Mikroprozessor auf, der bestimmte Betriebsparameter des Akkupacks, wie beispielsweise die mittels eines in dem Akkupack integrierten Messfühlers aufgenommene Temperatur oder den Ladezustand abspeichert und zur weiteren Auswertung an die Akku-Bohrmaschine oder das Ladegerät überträgt.

Aus der DE 10 2004 040 922 A1 ist ferner eine Wechselhandwerkzeugakkueinheit bekannt, die über eine Kopplungseinheit geladen werden kann. Die Kopplungseinheit ist dabei zum Laden der Wechselhandwerkzeugakkueinheit im montierten Zustand an einer Handwerkzeugmaschine vorgesehen, Ebenso ist es möglich, die Wechselhandwerkzeugakkueinheit im demontierten Zustand ohne die Handwerkzeugmaschine in den Aufnahmebereich einer Ladevorrichtung einzustecken.

Die EP 1 612 907 A2 zeigt einen Akkupack für eine Elektrohandwerkzeugmaschine bzw. für ein zugeordnetes Ladegeraet mit einem analogen Temperatursensor und einer von Außen zugänglichen Temperaturmessschnittstelle, über welche eine in der Elektrohandwerkzeugmaschine bzw. im Ladegeraet angeordnete Akkuschutzelektronik des Akkupacks beeinflussbar ist. Im Akkupack ist eine Notfallschutzschaltung vorhanden, die topologisch parallel zum analogen Temperatursensor geschaltet ist und über welche in einem Notfallereignis der über die Temperaturmessschnittstelle von Außen messbare Gesamtwiderstand aktiv verminderbar ist.

Die US 2006/0087286 A1 zeigt ferner eine akkubetriebene Elektrohandwerkzeugmaschine, deren Energiespeicher einen Messfühler zur Abgabe eines Messfühlersignals aufweist, wobei das Messfühlersignal sowohl durch die Elektrowerkzeugmaschine als auch durch das Ladegerät auswertbar ist.

### Offenbarung der Erfindung

Die Erfindung betrifft eine Ladevorrichtung umfassend ein Ladegerät sowie mindestens einen wechselbaren, wiederaufladbaren Energiespeicher, insbesondere einen Wechselakku, eines Elektrowerkzeugs, wobei jeder Energiespeicher erste Kontaktmittel zur Kontaktierung mit dem entsprechenden Elektrowerkzeug und weitere Kontaktmittel zur Kontaktierung mit dem Ladegerät derart aufweist, dass das Ladegerät den Energiespeicher über die weiteren Kontaktmittel sowohl in einem mit dem Elektrowerkzeug verbundenen Zustand als auch in einem mit dem Elektrowerkzeug nicht verbundenen Zustand aufladen kann. Erfindungsgemäß ist vorgesehen, dass jeder Energiespeicher einen Messfühler zur Abgabe eines Messfühlersignals bezüglich des jeweiligen Energiespeichers aufweist, wobei das Messfühlersignal sowohl durch das jeweilige Elektrowerkzeug als auch durch das Ladegerät auswertbar ist. Weiterhin ist das Messfühlersignal über die ersten Kontaktmittel des jeweiligen Energiespeichers an das Elektrowerkzeug und über die weiteren Kontaktmittel an das Ladegerät abgebbar. Darüber hinaus weist das jeweilige Elektrowerkzeug ein Auswerte- und Erkennungsmittel auf, das anhand des Messfühlersignals erkennt, ob das Ladegerät den mit dem Elektrowerkzeug verbundenen Energiespeicher auflädt. Besonders vorteilhaft ist diesbezüglich der Verzicht auf einen teuren und aufwändigen Multiplexer, der zwischen den einzelnen Elektrowerkzeugen und dem Ladegerät umschaltet. In vorteilhafter Weise kann eine Aufladung eines oder mehrerer Energiespeicher erfolgen, ohne dass diese zuvor aus dem jeweiligen Elektrowerkzeug entfernt werden müssen. Ebenso ist es möglich, die Energeispeicher separat, d.h. ohne das jeweilige Elektrowerkzeug, aufzuladen.

Aspekte der Erfindung werden demnach im unabhängigen Anspruch 1 offenbart.

Weitere Vorteile der Erfindung ergeben sich durch die in den abhängigen Ansprüchen angegebenen Merkmale sowie aus der Zeichnung und der nachfolgenden Beschreibung.

Das Messfühlersignal kann zum Beispiel ein Temperatursignal oder ein Spannungssignals eines als temperaturabhängigen Widerstand ausgebilden Messfühlers sein. Alternativ ist es auch möglich, dass der Messfühler ein Widerstand, ein Kondensator, eine Spule oder dergleichen zur Abgabe des Messfühlersignals in Gestalt eines Spannungs- oder Stromsignals ist.

Erkennt das Auswerte- und Erkennungsmittel des jeweiligen Elektrowerkzeugs einen Ladevorgang, so wertet es das Messfühlersignal nicht aus. In diesem Fall wird zur Erhöhung der Betriebssicherheit zudem eine Inbetriebnahme des Elektrowerkzeugs unterbunden. Wenn dagegen der mit dem Elektrowerkzeug verbundene Energiespeichers nicht aufgeladen wird, so erfolgt eine Auswertung des Messfühlersignals durch das Auswerte- und Erkennungsmittel des jeweiligen Elektrowerkzeugs, und das Elektrowerkzeug kann in Betrieb genommen werden. Die Sicherheit lässt sich noch weiter erhöhen, indem das Auswerte- und Erkennungsmittel des jeweiligen Elektrowerkzeugs bei jedem Messvorgang prüft, ob das Ladegerät den mit dem Elektrowerkzeug verbundenen Energiespeicher auflädt.

In einer alternativen Ausgestaltung ist vorgesehen, dass das Ladegerät die Auswertung des Messfühlersignals für ein definiertes Zeitintervall unterbricht. In vorteilhafter Weise erkennt das Auswerte- und Erkennungsmittel des jeweiligen Elektrowerkzeugs die durch das Ladegerät vorgenommene Unterbrechung der Auswertung des Messfühlersignals und wertet das Messfühlerrsignal während des definierten Zeitintervalls aus. Weiterhin ist vorgesehen, dass jedem mit dem Ladegerät verbundenen Energiespeicher eines Elektrowerkzeugs ein eigenes definiertes Zeitintervall durch das Ladegerät zugewiesen ist, in dem das Auswerteund Erkennungsmittel des jeweiligen Elektrowerkzeugs das Messfühlersignal des mit ihm verbundenen Energiespeichers auswertet. Nach Beendigung des definierten Zeitintervalls setzt das Ladegerät die Auswertung des Messfühlersignals wieder fort.

In einer vorteilhaften Ausgestaltung arbeitert die ersten und/oder die weiteren Kontaktmittel des Energiespeichers sowie die entsprechenden Kontaktmittel des Elektrowerkzeugs und/oder des Ladegeräts zumindest für die Übertragung des Messfühiersignals berührungslos, insbesondere induktiv. Auf diese Weise kann einer mechanischen Abnutzung oder einer Korrosion der Kontaktmittel wirksam entgegen gewirkt werden.

### Zeichnung

Die Erfindung wird im Folgenden anhand der Figuren 1 bis 3 beispielhaft erläutert, wobei gleiche Bezugszeichen in den Figuren auf gleiche Bestandteile mit einer gleichen Funktionsweise hindeuten.

### Es zeigen

Fig. 1: ein Ausführungsbeispiel für die erfindungsgemäße Ladevorrichtung in einer Seitenansicht,
Fig. 2: ein schematisches Blockschaltbild der erfindungsgemäßen Ladevorrichtung gemäß Figur 1 und
Fig. 3: ein schematisches Blockschaltbild eines weiteren Ausführungsbeispiels der erfindungsgemäßen Ladevorrichtung.

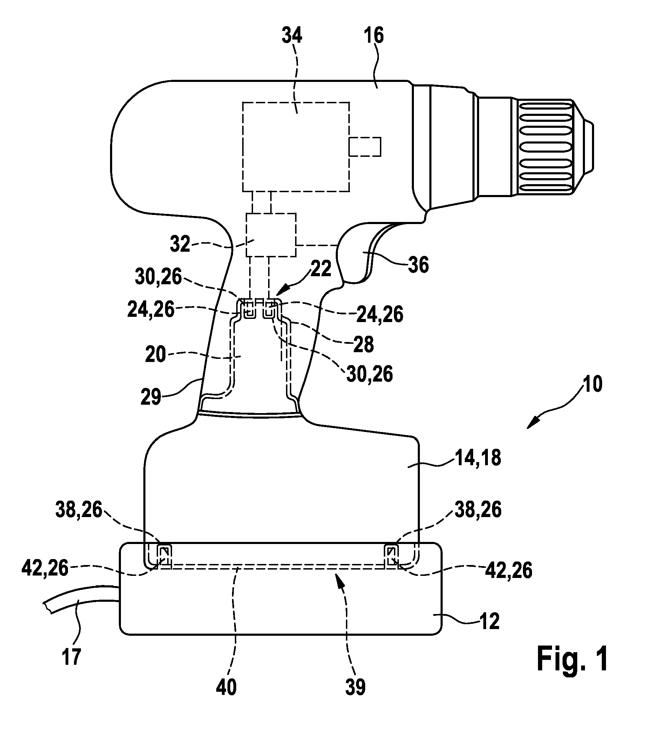

In Figur 1 ist eine Ladevorrichtung 10 gezeigt, die ein Ladegerät 12 sowie mindestens einen wechselbaren, wiederaufladbaren Energiespeicher 14 eines Elektrowerkzeugs 16 umfasst. Das Ladegerät 12 ist zur Energieversorgung beispielsweise über eine Netzleitung 17 mit einem nicht dargestellten Stromnetz verbunden. Das Elektrowerkzeug 16 ist im gezeigten Ausführungsbeispiel als ein Akkuschrauber oder eine Akkubohrmaschine ausgestaltet, auf deren elektro-mechanischen Aufbau im Einzelnen nicht näher eingegangen werden soll. Die Erfindung kann jedoch ohne Einschränkung auch auf alle anderen entsprechend geeigneten akkubetriebenen Elektrowerkzeuge, wie Akkuschleifgeräte, Akkulampen, Akkutacker, Akkusägen oder dergleichen, angewendet werden. Als wechselbarer, wiederaufladbarer Energiespeicher 14 dient ein Wechselakku 18, der aus einer oder mehreren Nickel-Cadmium-, Nickel-Metall-Hybrid-, Litium-Ionen- oder vergleichbaren Akkuzellen besteht. Als eine weitere Möglichkeit für die Ausgestaltung des wiederaufladbaren Energiespeichers 14 wäre auch ein Kondensator bzw. eine Anordnung mehrere Kondensatoren in Parallel- und/oder Reihenschaltung denkbar. Im Folgenden soll jedoch ausschließlich von dem Wechselakku 18 ausgegangen werden.

Der Wechselakku 18 ist lösbar mit dem Elektrowerkzeug 16 verbunden. Zu diesem Zweck verfügt er in bekannter Weise über nicht gezeigte Rastmittel, die in entsprechende, ebenfalls nicht gezeigte Aufnahmen des Elektrowerkzeugs 16 greifen. Dem Fachmann sind verschiedenste Möglichkeiten zur Verrastung des Wechselakkus 18 mit dem Elektrowerkzeug 16 bekannt, so dass auf deren Beschreibung nicht im Einzelnen eingegangen werden soll. Der Wechselakku 18 verfügt über einen Schaft 20, an dessen oberen Ende 22 erste Kontaktmittel 24, beispielsweise in Gestalt elektrischer Federkontakte 26 oder dergleichen, angebracht sind. Der Schaft 20 greift zur mechanischen Stabilisierung in eine Aufnahme 28 eines Griffs 29 des Elektrowerkzeugs 16. Dabei ergibt sich eine elektrische Verbindung der ersten Kontaktmittel 24 des Wechselakkus 18 zu entsprechend ausgebildeten Kontaktmitteln 30 des Elektrowerkzeugs 16, die ebenfalls als elektrische Federkontakte 26, Kontaktstifte oder dergleichen ausgeführt sein können. Über diese elektrische Verbindung kann ein Elektromotor 34 des Elektrowerkzeugs 16 mittels einer in dem Elektrowerkzeug 16 integrierten Elektronik 32 in Abhängigkeit von einem Schalt- oder Tastmittel 36 mit Energie versorgt werden. Die ersten Kontaktmittel 24 des Wechselakkus 18 ermöglichen neben der Energieübertragung aber auch die Übertragung weiterer Signale zur Überwachung des Wechselakkus 18, auf die nachfolgend noch näher eingegangen werden soll.

Zur Kontaktierung mit dem Ladegerät 12 weist der Wechselakku 18 an seinem unteren Ende 39 weitere Kontaktmittel 38 auf, die wie die ersten Kontakmittel 24 als elektrische Federkontakte 26 ausgebildet sein können. Für den Ladevorgang wird der Wechselakku 18 in eine entsprechende Aufnahme 40 des Ladegeräts 12 gelegt oder geschoben und mit diesem gegebenenfalls verrastet. Dabei treten die weiteren Kontakmittel 38 des Wechselakkus 18 mit entsprechenden Kontakmitteln 42 des Ladegeräts 12, die wiederum als elektrische Federkontakte 26 oder dergleichen ausgeführt sein können, in eine elektrische Verbindung zur Energieversorgung des Wechselakkus 18. Der Ladevorgang des Wechselakkus 18 erfolgt nun automatisch unmittelbar nach dem Einlegen, Einsetzen bzw. Einschieben in die Aufnahme 40 oder mittelbar nach der Betätigung eines nicht gezeigten Schalt- oder Tastmittels. Wie schon die ersten Kontaktmittel 24, so ermöglichen auch die weiteren Kontaktmittel 38 neben der Energieübertragung eine Übertragung weiterer Signale zur Überwachung des Wechselakkus 18.

Die Begriffe "unteres Ende" und "oberes Ende" des Wechselakkus 18 bzw. des Schafts 20 beziehen sich auf die gewöhnliche Arbeitshaltung des Elektrowerkzeugs 16 mittels des Griffs 29. Die ersten und weiteren Kontakmittel 24 bzw. 38 des Wechselakkus 18 können jedoch auch an anderen, zweckmäßigen Stellen angebracht sein. Von Bedeutung ist diesbezüglich, dass der Wechselakku 18 über die weiteren Kontaktmittel 38 sowohl in einem mit dem Elektrowerkzeug 16 verbundenen, d.h. in einem eingesetzten Zustand als auch in einem mit dem Elektrowerkzeug 16 nicht verbundenen, d.h. in einem herausgenommenen Zustand, aufladbar ist.

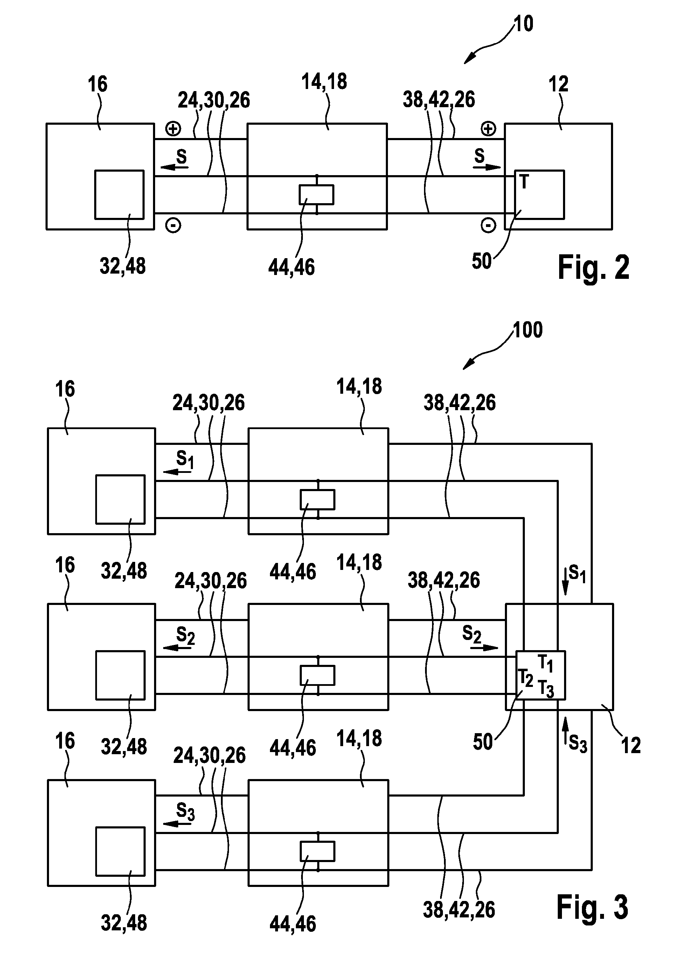

Figur 2 zeigt eine schematische Darstellung des Ausführungsbeispiels gemäß Figur 1 als Blockschaltbild. Die beiden äußeren Blöcke symbolisieren jeweils das Ladegerät 12 und das Elektrowerkzeug 16, wohingegen der mittlere Block dem Energiespeicher 14 bzw. dem Wechselakku 18 entspricht. Während die Kontaktierung des Wechselakkus 18 mit dem Elektrowerkzeug 16 in der oben beschriebenen Weise über die ersten Kontaktmittel 24 des Wechselakkus 18 sowie die entsprechenden Kontaktmittel 30 des Elektrowerkzeugs 16 erfolgt, besteht über die weiteren Kontaktmittel 38 des Wechselakkus 18 und die entsprechenden Kontaktmittel 42 des Ladegeräts 12 eine elektrische Verbindung zwischen dem Wechselakku 18 und dem Ladegerät 12. Die Anzahl der Kontaktmittel hängt dabei von der jeweiligen Anwendung ab. Im gezeigten Ausführungsbeispiel werden zwischen den einzelnen Baugruppen (Elektrowerkzeug 16, Wechselakku 18, Ladegerät 12) jeweils drei Kontatkmittel pro Baugruppe eingesetzt. Dabei dienen die jeweils äußeren Kontaktmittel zur Energieübertragung, d.h. als Versorgungs- bzw. als Masseanschluss (gekennzeichnet durch ein von einem Kreis umgebenes "+" bzw. "-"), während die mittleren Kontaktmittel in Verbindung mit den unteren Kontaktmitteln die Übertragung eines Messfühlersignals S eines in dem Wechselakku 18 integrierten Messfühlers 44 ermöglichen. Die Ausdrücke "äußere", "mittlere" und "untere Kontaktmittel" bezieht sich lediglich auf die Darstellung gemäß Figur 2 und gibt keinen Aufschluss über die tatsächliche Anordnung an den jeweiligen Baugruppen.

Ist der Messfühler 44 ein temperaturabhängiger Widerstand 46, beispielsweise ein Widerstand mit negativem Temperaturkoeffizienten (NTC), so stellt das von ihm abgegebene Messfühlersignal S ein Temperatursignal oder ein Spannungssignal dar, das sowohl vom Ladegerät 12 als auch vom Elektrowerkzeug 16 ausgewertet werden kann. Dieses Temperatur- oder Spannungssignal dient zur Überwachung des Wechselakkuzustands und zur Vermeidung einer Überhitzung oder einer sonstigen Beschädigung des Wechselakkus. Statt eines NTC ist es auch möglich, den Messfühler 44 als einen normalen Widerstand (Shunt), einen Kondensator, eine Spule oder dergleichen zur Abgabe des Messfühlersignals S in Form eines Spannungs- oder Stromsignals auszugestalten, wobei auch in diesem Fall das Messfühlersignal S eine Überwachung des Wechselakkuzustands ermöglicht.

Anhand des Messfühlersignals S kann das Elektrowerkzeug 16 mittels eines in der Elektronik 32 integrierten Auswerte- und Erkennungsmittels 48 nun zudem erkennen, ob das Ladegerät 12 den mit dem Elektrowerkzeug 16 verbundenen Wechselakku 18 auflädt. Dazu wertet das Auswerte- und Erkennungsmittel 48 beispielsweise das Temperatur- oder Spannungssignal derart aus, dass eine definierte Temperatur- oder Spannungsänderung auf einen Ladevorgang schließen lässt. Wird dieser erkannt, so unterbricht das Auswerte- und Erkennungsmittel 48 die Auswertung des Messfühlersignals S, so dass die Auswertung durch eine entsprechende Auswerte- und Steuerelektronik 50 des Ladegeräts 12 erfolgen kann. In diesem Fall wird darüber hinaus in vorteilhafter Weise ein Inbetriebsetzen des Elektrowerkzeugs 16 mittels des Schalt- oder Tastmittels 36 unterbunden, um die Betriebssicherheit zu gewährleisten. Erkennt das Auswerte- und Erkennungsmittel 48 des Elektrowerkzeugs 16 dagegen, dass keine Aufladung des Wechselakkus 18 erfolgt, so wertet es das Messfühlersignal S zur weiteren Überprüfung des Wechselakkuzustands aus. Eine derartige Überprüfung erfolgt in vorteilhafter Weise bei jedem Messvorgang oder bei jeder Betätigung des Schalt- oder Tastmittels 36.

Eine alternative Möglichkeit zur Auswertung des Messfühlersignals S durch das Ladegerät 12 und das Elektrowerkzeug 16 besteht in einer ladungsgeräteseitigen Unterbrechung der Auswertung durch das Ladegerät 12 bzw. dessen Auswerte- und Steuerelektronik 50 für ein definiertes Zeitintervall T, beispielsweise 30 Sekunden. Diese Unterbrechung wird infolge einer entsprechenden Temperatur-, Spannungs- oder Stromänderung des vom Messfühler 44 abgegebenen Messfühlersignals S durch die Auswerte- und Erkennungselektronik 48 des Elektrowerkzeugs 16, in der zum Beispiel ein bestimmter Referenzwert abgelegt ist, erkannt, so dass die Auswerte- und Erkennungselektronik 48 das Messfühlersignal S fortan für das definierte Zeitintervall T auswerten kann. Nach Beendigung des definierten Zeitintervalls T erfolgt die Auswertung dann wieder durch die Auswerte- und Steuerelektronik 50 des Ladegeräts 12.

In Figur 3 ist ein weiteres Ausführungsbeispiel einer erfindungsgemäßen Ladevorrichtung 100 gezeigt. Diese unterscheidet sich von der in der Figur 2 gezeigten Ladevorrichtung 10 lediglich durch die Mehrzahl der von dem Ladegerät 12 aufzuladenden Wechselakkus 18 der jeweiligen Elektrowerkzeuge 16, wobei die in Figur 3 gezeigte Anzahl von drei Elektrowerkzeugen 16 nicht einschränkend sondern lediglich beispielhaft zu verstehen ist. Da sowohl die Funktionsweise als auch die einzelnen Bestandteile der Ladevorrichtung 100 im Wesentlichen denjenigen gemäß Figur 2 entsprechen, soll auf eine erneute detaillierte Beschreibung verzichtet werden.

Die Auswerte- und Steuerelektronik 50 des Ladegeräts 12 ist nun derart ausgelegt, dass sie jedem Elektrowerkzeug 16 ein eigenes definiertes Zeitintervall T₁, T₂, T₃ zuweist, in dem das Auswerte- und Erkennungsmittel 48 des jeweiligen Elektrowerkzeugs 16 das entsprechende vom jeweiligen Messfühler 44 abgegebene Messfühlersignal S₁, S₂, S₃ des mit ihm verbundenen Wechselakkus 18 auswertet. Dabei können die einzelnen Zeitintervalle T₁, T₂, T₃ gleich lang oder beispielsweise in Abhängigkeit vom jeweiligen Ladezustand oder Messfühlersignal S₁, S₂, S₃ des entsprechenden Wechselakkus 18 unterschiedlich lang sein. Ist das jeweilige Zeitintervall T₁, T₂ bzw. T₃ beendet, so erfolgt die Auswertung der Messfühlersignale S₁, S₂ bzw. S₃ wieder durch das Ladegerät 12.

Die erfindungsgemäße Ladevorrichtung 100 erlaubt somit eine Auswertung mehrerer Messfühlersignale ohne den Einsatz eines Multiplexers, mit dem zwischen den einzelnen Wechselakkus 18 sowie den in ihnen integrierten Messfühlern 44 umgeschaltet werden müsste. Zudem ist ein reines Erkennen weiterer Messschaltungen, d.h. Auswerte- und Erkennungsmitteln bzw. -elektroniken, ohne die Notwendigkeit einer Auswertung der Messfühlersignale möglich.

Es sei abschließend noch daraufhingewiesen, dass die gezeigten Ausführungsbeispiele weder auf die Figuren 1 bis 3 noch auf die genannten Werte für die Zeitintervalle oder die Anzahl der zu ladenden und zu übewachenden Wechselakkus beschränkt sind. Wie bereits erwähnt, können die Kontaktmittel 24, 30, 38, 42 als elektrische Ferderkontakte 26 ausgebildet sein. Es ist andererseits aber auch denkbar, dass die ersten und/oder die weiteren Kontaktmittel 24 bzw. 38 des Wechselakkus 18 sowie die entsprechenden Kontaktmittel 30 bzw. 42 des Elektrowerkzeugs 16 und/oder des Ladegeräts 12 zumindest für die Übertragung der Messfühlersignale S, S₁, S₂, S₃ berührungslos, insbesondere induktiv, arbeiten. Weiterhin ist die Ausgestaltung des Wechselakkus 18 mit dem Schaft 20 nur beispielhaft zu verstehen. Selbstverständlich kann die Erfindung auch auf abweichend gestaltete Wechselakkus angewendet werden.

## Patentansprüche

1. Ladevorrichtung (10, 100) umfassend ein Ladegerät (12) sowie mindestens einen wechselbaren, wiederaufladbaren Energiespeicher (14), insbesondere einen Wechselakku (18), eines Elektrowerkzeugs (16), wobei jeder Energiespeicher (14) erste Kontaktmittel (24) zur Kontaktierung mit dem entsprechenden Elektrowerkzeug (16) und weitere Kontaktmitteln (38) zur Kontaktierung mit dem Ladegerät (12) derart aufweist, dass das Ladegerät (12) den Energiespeicher (14) über die weiteren Kontaktmittel (38) sowohl in einem mit dem Elektrowerkzeug (16) verbundenen Zustand als auch in einem mit dem Elektrowerkzeug (16) nicht verbundenen Zustand aufladen kann, **dadurch gekennzeichnet, dass**
- jeder Energiespeicher (14) einen Messfühler (44) zur Abgabe eines Messfühlersignals (S, S₁, S₂, S₃) bezüglich des jeweiligen Energiespeichers (14) aufweist, wobei das Messfühlersignal (S, S₁, S₂, S₃) sowohl durch das jeweilige Elektrowerkzeug (16) als auch durch das Ladegerät (12) auswertbar ist,
- das Messfühlersignal (S, S₁, S₂, S₃) über die ersten Kontaktmittel (24) des jeweiligen Energiespeichers (14) an das Elektrowerkzeug (16) und über die weiteren Kontaktmittel (38) an das Ladegerät (12) abgebbar ist, und
- das jeweilige Elektrowerkzeugs (16) ein Auswerte- und Erkennungsmittel (48) aufweist, das anhand des Messfühlersignals (S, S₁, S₃, S₃) erkennt, ob das Ladegerät (12) den mit dem Elektrowerkzeug (16) verbundenen Energiespeicher (14) auflädt.

2. Ladevorrichtung (10, 100) nach Anspruch 1, **dadurch gekennzeichnet, dass** im Falle eines erkannten Ladevorgangs keine Auswertung des Messfühlersignals (S, S₁, S₂, S₃) durch das Auswerte- und Erkennungsmittel (48) des Elektrowerkzeugs (16) erfolgt.

3. Ladevorrichtung (10, 100) nach einem der vorhergehenden Ansprüche, **dadurch gekennzeichnet, dass** das Auswerte- und Erkennungsmittel (48) des jeweiligen Elektrowerkzeugs (16) das Messfühlersignal (S, S₁, S₂, S₃) auswertet, wenn kein Ladevorgang des mit dem Elektrowerkzeug (16) verbundenen Energiespeichers (14) erfolgt.

4. Ladevorrichtung (10, 100) nach einem der vorhergehenden Ansprüche, **dadurch gekennzeichnet, dass** das Auswerte- und Erkennungsmittel (48) des jeweiligen Elektrowerkzeugs (16) bei jedem Messvorgang prüft, ob das Ladegerät (12) den mit dem Elektrowerkzeug (16) verbundenen Energiespeicher (14) auflädt.

5. Ladevorrichtung (10, 100) nach einem der vorhergehenden Ansprüche, **dadurch gekennzeichnet, dass** das Ladegerät (12) die Auswertung des Messfühlersignals (S, S₁, S₂, S₃) für ein definiertes Zeitintervall (T, T₁, T₂, T₃) unterbricht.

6. Ladevorrichtung (10, 100) nach Anspruch 5, **dadurch gekennzeichnet, dass** das Auswerte- und Erkennungsmittel (48) des jeweiligen Elektrowerkzeugs (16) die durch das Ladegerät (12) vorgenommene Unterbrechung der Auswertung des Messfühlersignals (S, S₁, S₂, S₃) erkennt und das Messfühlerrsignal (S, S₁, S₂, S₃) während des definierten Zeitintervalls (T, T₁, T₂, T₃) auswertet.

7. Ladevorrichtung (10, 100) nach einem der vorherigen Ansprüchen, **dadurch gekennzeichnet, dass** jedem mit dem Ladegerät (12) verbundenen Energiespeicher (14) eines Elektrowerkzeugs (16) ein eigenes definiertes Zeitintervall (T₁, T₂, T₃) durch das Ladegerät (12) zugewiesen ist, in dem das Auswerte- und Erkennungsmittel (48) des jeweiligen Elektrowerkzeugs (16) das Messfühlersignal (S₁, S₂, S₃) des mit ihm verbundenen Energiespeichers (14) auswertet.

8. Ladevorrichtung (10, 100) nach einem der vorhergehenden Ansprüche 5 bis 7, **dadurch gekennzeichnet, dass** das Ladegerät (12) die Auswertung des Messfühlersignals (S, S₁, S₂, S₃) nach dem definierten Zeitintervall (T, T₁, T₂, T₃) wieder fortsetzt.

9. Ladevorrichtung (10, 100) nach einem der vorhergehenden Ansprüche, **dadurch gekennzeichnet, dass** der Messfühler (44) als temperaturabhängiger Widerstand (46) ausgebildet ist zur Abgabe eines Temperatursignal oder eines Spannungssignals als Messfühlersignal (S, S₁, S₂, S₃),

10. Ladevorrichtung (10, 100) nach einem der vorhergehenden Ansprüche 1 bis 8, **dadurch gekennzeichnet, dass** der Messfühler (44) ein Widerstand, ein Kondensator, eine Spule oder dergleichen ist zur Abgabe eines Spannungs- oder Stromsignals als Messfühlersignal (S, S₁, S₂, S₃).

11. Ladevorrichtung (10, 100) nach einem der vorhergehenden Ansprüche, **dadurch gekennzeichnet, dass** die ersten (24) und/oder die weiteren Kontaktmittel (38) des Energiespeichers (14) sowie die entsprechenden Kontaktmittel (30, 42) des Elektrowerkzeugs (16) und/oder des Ladegeräts (12) zumindest für die Übertragung des Messfühlersignals (S, S₁, S₂, S₃) berührungslos, insbesondere induktiv, arbeiten.

## Claims

1. Charging device (10, 100) comprising a charger (12) and at least one exchangeable rechargeable energy store (14), in particular a replacement storage battery (18), of an electric tool (16), each energy store (14) having first contact means (24) for making contact with the corresponding electric tool (16) and further contact means (38) for making contact with the charger (12) in such a manner that the charger (12) can charge the energy store (14) via the further contact means (38) both in a state connected to the electric tool (16) and in a state not connected to the electric tool (16), **characterized in that**
- each energy store (14) has a sensor (44) for emitting a sensor signal (S, S₁, S₂, S₃) with respect to the respective energy store (14), the sensor signal (S, S₁, S₂, S₃) being able to be evaluated both by the respective electric tool (16) and by the charger (12),
- the sensor signal (S, S₁, S₂, S₃) can be emitted to the electric tool (16) via the first contact means (24) of the respective energy store (14) and can be emitted to the charger (12) via the further contact means (38), and
- the respective electric tool (16) has an evaluation and detection means (48) which uses the sensor signal (S, S₁, S₂, S₃) to detect whether the charger (12) is charging the energy store (14) connected to the electric tool (16).

2. Charging device (10, 100) according to Claim 1, **characterized in that** the sensor signal (S, S₁, S₂, S₃) is not evaluated by the evaluation and detection means (48) of the electric tool (16) if a charging process is detected.

3. Charging device (10, 100) according to one of the preceding claims, **characterized in that** the evaluation and detection means (48) of the respective electric tool (16) evaluates the sensor signal (S, S₁, S₂, S₃) if no process of charging the energy store (14) connected to the electric tool (16) is taking place.

4. Charging device (10, 100) according to one of the preceding claims, **characterized in that** the evaluation and detection means (48) of the respective electric tool (16) checks during each measuring process whether the charger (12) is charging the energy store (14) connected to the electric tool (16).

5. Charging device (10, 100) according to one of the preceding claims, **characterized in that** the charger (12) interrupts the evaluation of the sensor signal (S, S₁, S₂, S₃) for a defined interval of time (T, T, T₂, T₃).

6. Charging device (10, 100) according to Claim 5, **characterized in that** the evaluation and detection means (48) of the respective electric tool (16) detects the interruption in the evaluation of the sensor signal (S, S₁, S₂, S₃), which is carried out by the charger (12), and evaluates the sensor signal (S, S₁, S₂, S₃) during the defined interval of time (T, T₁, T₂, T₃).

7. Charging device (10, 100) according to one of the preceding claims, **characterized in that** the charger (12) allocates a separate defined interval of time (T₁, T₂, T₃) to each energy store (14) of an electric tool (16) which is connected to the charger (12), in which interval of time the evaluation and detection means (48) of the respective electric tool (16) evaluates the sensor signal (S₁, S₂, S₃) from the energy store (14) connected to it.

8. Charging device (10, 100) according to one of the preceding Claims 5 to 7, **characterized in that** the charger (12) continues the evaluation of the sensor signal (S, S₁, S₂, S₃) again after the defined interval of time (T, T₁, T₂, T₃).

9. Charging device (10, 100) according to one of the preceding claims, **characterized in that** the sensor (44) is in the form of a temperature-dependent resistor (46) for emitting a temperature signal or a voltage signal as the sensor signal (S, S₁, S₂, S₃).

10. Charging device (10, 100) according to one of the preceding Claims 1 to 8, **characterized in that** the sensor (44) is a resistor, a capacitor, a coil or the like for emitting a voltage or current signal as the sensor signal (S, S₁, S₂, S₃).

11. Charging device (10, 100) according to one of the preceding claims, **characterized in that** the first contact means (24) and/or the further contact means (38) of the energy store (14) and the corresponding contact means (30, 42) of the electric tool (16) and/or of the charger (12) operate contactlessly, in particular inductively, at least for transmitting the sensor signal (S, S₁, S₂, S₃).

## Revendications

1. Dispositif de charge (10, 100) comprenant un appareil de charge (12) ainsi qu'au moins un accumulateur d'énergie amovible et rechargeable (14), notamment un accumulateur amovible (18), d'un véhicule électrique (16), dans lequel chaque accumulateur d'énergie (14) comporte des premiers moyens de contact (24) destinés à la mise en contact avec le véhicule électrique (16) correspondant et d'autres moyens de contact (38) destinés à la mise en contact avec l'appareil de charge (12) de manière à ce que l'appareil de charge (12) puisse charger l'accumulateur d'énergie (14) par l'intermédiaire des autres moyens de contact (38) aussi bien dans un état connecté au véhicule électrique (16) que dans un état non connecté au véhicule électrique (16), **caractérisé en ce que**
- chaque accumulateur d'énergie (14) comporte un capteur (44) destiné à délivrer un signal de capteur (S, S₁, S₂, S₃) concernant l'accumulateur- d'énergie respectif (14), dans lequel le signal de capteur (S, S₁, S₂, S₃) peut être évalué aussi bien par le véhicule électrique respectif (16) que par l'appareil de charge (12),
- le signal de capteur (S, S₁, S₂, S₃) peut être délivré au véhicule électrique (16) à l'appareil de charge (12) par l'intermédiaire des premiers moyens de contact (24) de l'accumulateur d'énergie respectif (14) et par l'intermédiaire des autres moyens de contact (38), et
- le véhicule électrique respectif (16) comporte un moyen d'évaluation et de détection (48) qui détecte, sur la base du signal de capteur (S, S₁, S₂, S₃) si l'appareil de charge (12) charge l'accumulateur d'énergie (14) connecté au véhicule électrique (16).

2. Dispositif de charge (10, 100) selon la revendication 1, **caractérisé en ce que**, dans le cas où un processus de charge est détecté, aucune évaluation du signal de capteur (S, S₁, S₂, S₃) n'est effectuée par le moyen d'évaluation et de détection (48) du véhicule électrique (16).

3. Dispositif de charge (10, 100) selon l'une quelconque des revendications précédentes, **caractérisé en ce que** le moyen d'évaluation et de détection (48) du véhicule électrique respectif (16) évalue le signal de capteur (S, S₁, S₂, S₃) lorsqu'aucun processus de charge de l'accumulateur d'énergie (14) connecté au véhicule électrique (16) n'est effectué.

4. Dispositif de charge (10, 100) selon l'une quelconque des revendications précédentes, **caractérisé en ce que** le moyen d'évaluation et de détection (48) du véhicule électrique respectif (16) vérifie, lors de chaque processus de mesure, si l'appareil de charge (12) charge l'accumulateur d'énergie (14) connecté au véhicule électrique (16).

5. Dispositif de charge (10, 100) selon l'une quelconque des revendications précédentes, **caractérisé en ce que** l'appareil de charge (12) interrompt l'évaluation du signal de capteur (S, S₁, S₂, S₃) pendant un intervalle de temps défini (T, T₁, T₂, T₃).

6. Dispositif de charge (10, 100) selon la revendication 5, **caractérisé en ce que** le moyen d'évaluation et de détection (48) du véhicule électrique respectif (16) détecte l'interruption effectuée par l'appareil de charge (12) de l'évaluation du signal de capteur (S, S₁, S₂, S₃) et évalue le signal de capteur (S, S₁, S₂, S₃) pendant l'intervalle de temps défini (T, T₁, T₂, T₃).

7. Dispositif de charge (10, 100) selon l'une quelconque des revendications précédentes, **caractérisé en ce qu'**un intervalle de temps défini (T₁, T₂, T₃) est associé à chaque accumulateur d'énergie (14) connecté à l'appareil de charge (12) d'un véhicule électrique (16) par l'appareil de charge (12) en faisant en sorte que le moyen d'évaluation et de détection (48) du véhicule électrique respectif (16) évalue le signal de capteur (S₁, S₂, S₃) de l'accumulateur d'énergie (14) qui lui est connecté.

8. Dispositif de charge (10, 100) selon l'une quelconque des revendications 5 à 7 précédentes, **caractérisé en ce que** l'appareil de charge (12) poursuit l'évaluation du signal de capteur (S, S₁, S₂, S₃) après l'intervalle de temps défini (T, T₁, T₂, T₃).

9. Dispositif de charge (10, 100) selon l'une quelconque des revendications précédentes, **caractérisé en ce que** le capteur (44) est réalisé sous la forme d'une résistance dépendant de la température (46) pour délivrer un signal de température ou un signal de tension en tant que signal de capteur (S, S₁, S₂, S₃).

10. Dispositif de charge (10, 100) selon l'une quelconque des revendications 1 à 8 précédentes, **caractérisé en ce que** le capteur (44) est une résistance, un condensateur, une bobine ou autre, destiné à délivrer un signal de tension ou de courant en tant que signal de capteur (S, S₁, S₂, S₃).

11. Dispositif de charge (10, 100) selon l'une quelconque des revendications précédentes, **caractérisé en ce que** les premier (24) et/ou les autres moyens de contact (38) de l'accumulateur d'énergie (14) ainsi que les moyens de contact correspondants (30, 42) du véhicule électrique (16) et/ou de l'appareil de charge (12) fonctionnent au moins pour transmettre le signal de capteur (S, S₁, S₂, S₃) sans contact, notamment par induction.
